# EUROPÄISCHE PATENTSCHRIFT

(11) **EP 0 561 149 B1**
(45) Veröffentlichungstag und Bekanntmachung des Hinweises auf die Patenterteilung: **02.01.1997**
(21) Anmeldenummer: 93101954.1
(22) Anmeldetag: 08.02.1993
(51) Int. Cl.: H02H 3/20, H02H 9/04

(54) **Anordnung zur Stromversorgung einer Elektronik aus einem Drehstromnetz**
Arrangement for current supply of an electronic unit from a three phase network
Arrangement pour l'alimentation en courant d'une électronique d'une réseau triphasé

(30) Priorität: 20.02.1992 DE 4205209
(43) Veröffentlichungstag der Anmeldung: 22.09.1993
(73) Patentinhaber: SIEMENS AKTIENGESELLSCHAFT, 80333 München (DE)
(72) Erfinder: Pohl, Fritz, W-8551 Hemhofen (DE); Harr, Dieter, W-8400 Regensburg (DE)

(56) Entgegenhaltungen:
- EP-A- 0 173 016
- EP-A- 0 173 165
- DE-A- 3 632 760
- DE-A- 4 015 301
- US-A- 4 152 743
- ELEKTRONIK, Band 18, September 1982, Seiten 99-102; P. BROGL : 'Überspannungsschutz mit Metalloxidvaristoren'

## Beschreibung

Die Erfindung bezieht sich auf eine Anordnung zur Stromversorgung einer Elektronik, die an ein Drehstromnetz mit einem Nulleiter angeschlossen ist und mit einer Überwachungsschutzeinrichtung aus einzelnen in die Phasenleiter und/oder Nulleiter eingeschalteten Überspannungsbegrenzungselementen versehen ist. Eine solche Anordnung dient insbesondere zur Stromversorgung einer Netzüberwachungseinrichtung, beispielsweise der Elektronik eines Differenzstrom-Schutzschalters, der über einen Gleichrichter in Dreiphasen-Brückenschaltung an ein Drehstromnetz mit einem Nulleiter angeschlossen ist und in einem Gehäuse aus elektrisch isolierendem Material angeordnet ist. Solche Geräte benötigen keinen Erdungsschutz.

Elektronisch gesteuerte Schutzschalter, beispielsweise die Kombination eines Fehlerstromschutzschalters (FI) mit einem Differenzstrom-Schutzschalter (DI), benötigen zur elektrischen Versorgung ihrer Elektronik einen Netzanschluß. Solche Schutzschalter müssen auch bei oder nach Netzstörungen betriebssicher arbeiten. Eine besondere Netzstörung stellen dabei impulsartig auftretende Überspannungen und Überströme dar, wie sie bei Blitzeinwirkung im elektrischen Netz auftreten. Neben der Überspannung, die am Netzteil angreift, können in den spannungsführenden Teilen, beispielsweise Strombahnen, Meßspulen, Auslösern oder Abschirmungen, Störungen und Beschädigungen durch Spannungsüberschläge ausgelöst werden.

Für FI-Schutzschalter, die bekanntlich netzspannungsunabhängig arbeiten, gilt die Forderung der Stoßspannungsfestigkeit gegen einen 1,2/50 µs-Stoßspannungsimpuls mit 8 kV-Amplitude nach VDE, wobei der Generatorinnenwiderstand Rᵢ = 500 Ohm beträgt. Diese Forderung wird von FI-Schutzschaltern durch deren Aufbau erfüllt.

Bei FI/DI-Kombinations-Schutzschaltern ähnlich kompakten Aufbaus wie FI-Schutzschalter ist bei Überschlägen die Zerstörung der Elektronik möglich, da in solchen Geräten die unterschiedlichen Potentiale auf engem Raum nicht genügend voneinander isoliert werden können.

Eine ausreichende Begrenzung der Stoßspannungsamplitude erhält man bekanntlich durch ein spannungsbegrenzendes Bauteil, beispielsweise einen Varistor, von jedem Phasenleiter gegen den Nulleiter (maximal 8 kV bei Rᵢ = 500 Ohm, Î = 16 A, keine wesentliche Varistorbelastung bei 1,2/50 µs-Impuls). Es können relativ kleine Scheibenvaristoren eingebaut werden, die den Raumbedarf des Gerätes nicht wesentlich vergrößern.

Gemäß DIN IEC wird nun eine zusätzliche Forderung gestellt, nämlich daß mit einem Stoßspannungsimpuls 1,2/50 µs und 4 kV- Amplitude und einem Generatorinnenwiderstand Rᵢ = 2 Ohm jeder Leiter gegen jeden anderen Leiter zu prüfen ist. Wenn der Generator mit zwei in Reihe geschalteten Scheibenvaristoren belastet wird, wie es bei der Prüfung Phasenleiter gegen Phasenleiter auftritt, fließt noch nicht zuviel Strom für den Varistor. Bei der Prüfung Phasenleiter gegen Nulleiter ist jedoch nur ein einziger Scheibenvaristor als Belastung vorhanden und der Strom ist so hoch, daß der Scheibenvaristor nach wenigen Stoßspannungsimpulsen zerstört wird. Als Abhilfe wäre zwar die Verwendung von Blockvaristoren größerer Abmessungen und ebenfalls größerer Stoßstromfestigkeit möglich, damit würde aber auch der FI/DI-Schutzschalter wesentlich größere Abmessungen erhalten.

Aus der EP-A-0 173 165 ist eine Einrichtung der eingangs genannten Art bekannt, bei der jeder der drei Phasenleiter sowie der Nulleiter über je ein Überspannungsschutzelement mit Erdpotential verbunden ist. Dies bewirkt zwingend, daß eine Überspannung in einem der vier Leiter einen Ableitstrom über das Schutzelement hervorruft, der vom Zustand der übrigen drei Leiter unabhängig ist und nicht beeinflußt wird. Daher begrenzt das Überspannungsschutzelement die Überspannung des betroffenen Leiters auf Erdpotential zuzüglich dem Spannungsabfall am Schutzelement.

Der Erfindung liegt demgegenüber die Aufgabe zugrunde, eine Anordnung zur Stromversorgung einer Elektronik ohne Erdungsschutz so zu gestalten, daß man ohne wesentlichen zusätzlichen Platzbedarf eine hohe Spannungsfestigkeit derartiger Einrichtungen erhält oder daß wenigstens die Spannungsbelastung bei kurzzeitig eingestreuten Überspannungen vermindert wird. Insbesondere soll die Stromversorgung der Elektronik eines DI-Schalters, der mit einem FI-Schalter kombiniert ist, noch funktionsfähig bleiben, wenn einer oder sogar zwei der Netzleiter oder ein Netzleiter und der Nulleiter ausfallen.

Es ist bekannt, daß in Drehstrom-Niederspannungsanlagen vor einem vierpoligen Fehlerstromschutzschalter zum Überspannungsschutz des Netzes Ventilableiter vorgesehen sein Können. Vor dem Fehlerstromschutzschalter sind die Drehstrom-Phasenleiter und der Nulleiter jeweils über einen Ventilableiter an Erde gelegt. In dieser bekannten Ausführungsform fließen somit im Falle einer Überspannung die Ströme jeweils über nur einen der Überspannungsableiter nach Erde ab (Hasse: Überspannungsschutz von Niederspannungsanlagen, Seite 97, Verlag TÜV, Rheinland).

Gemäß der Erfindung wird die genannte Aufgabe eines Überspannungs-Geräteschutzes, der unabhängig ist von einem Überspannungsnetzschutz, gelöst mit den kennzeichnenden Merkmalen des Anspruchs 1. In einer Ausführungsform der Anordnung zur Stromversorgung einer Elektronik kann als Begrenzungselement ein Widerstand vorgesehen sein. Eine weitere Lösung besteht darin, daß die Drehstrom-Phasenleiter und der Nulleiter jeweils über einen Überspannungsableiter an eine gemeinsame Verbindung angeschlossen sind. In dieser Ausführungsform der Stromversorgung liegen im Falle einer Überspannung zwischen allen Leitern jeweils immer zwei Überspannungsableiter, insbesondere Varistoren, hintereinander.

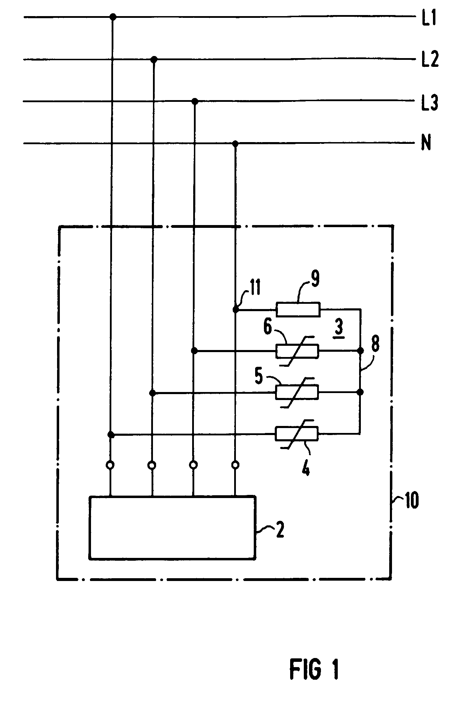

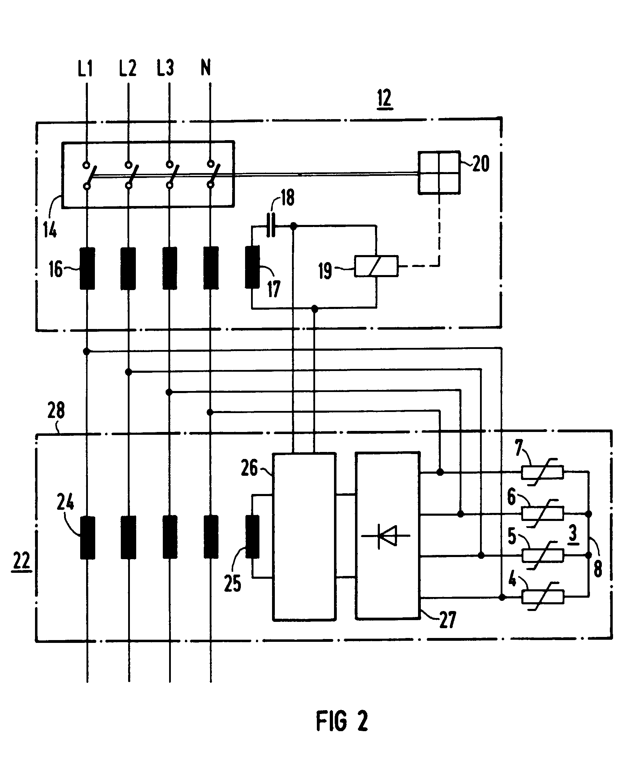

Zur weiteren Erläuterung wird auf die Zeichnung Bezug genommen, in deren Figur 1 die Stromversorgung einer Einrichtung zur Netzüberwachung schematisch veranschaulicht ist. In Figur 2 ist die Kombination eines Fehlerstromschutzschalters mit einem Differenzstrom-Schutzschalter dargestellt.

In der Anordnung gemäß Figur 1 ist eine Überwachungseinrichtung 2 zur Überwachung des Betriebszustandes eines Drehstromnetzes mit den Phasenleitern L1, L2 und L3 und einem Nulleiter N ohne Schutzleiter vorgesehen. Dieser Überwachungseinrichtung 2 ist ein Überspannungsschutz 3 zugeordnet, der drei Überspannungsableiter 4, 5 und 6 sowie einen als Begrenzungselement 9 dienenden Widerstand enthält. Die Phasenleiter L1, L2 und L3 sind jeweils über einen der Überspannungsableiter 4 bis 6 an eine gemeinsame Leitungsverbindung 8 angeschlossen, die mit dem Nulleiter N verbunden ist. Der Widerstandswert des Begrenzungselementes 9 liegt bei den kritischen Überspannungen einer Anordnung zur Überwachung eines Niederspannungsnetzes etwa in der Größenordnung des Widerstandswertes der Überspannungsableiter 4 bis 6; sein Widerstandswert kann beispielsweise etwa 1 bis 10 Ohm, vorzugsweise etwa 3 bis 6 Ohm, betragen. Die Überwachungseinrichtung 2 und der zugeordnete Überspannungsschutz 3 sind in einem gemeinsamen Gehäuse 10 angeordnet, das aus elektrisch isolierendem Material, vorzugsweise aus Kunststoff, besteht und somit keinen Erdungsschutz benötigt.

Um beispielsweise den Stoßstrom zu einem 4 kV-Stoßspannungsimpuls 1,2/50 µs und 2 Ohm Innenwiderstand der Stoßspannungsquelle beispielsweise auf eine Stromamplitude Î = 300 A zu begrenzen, werden die Varistoren 4 bis 6 im allgemeinen so ausgelegt, daß ihre Durchlaßspannung etwa 1,7 kV beträgt und der Widerstandswert des Begrenzungselementes 9 etwa 5,5 Ohm beträgt. Bei einer Stoßspannung von 4 kV beispielsweise zwischen Phasenleiter L1 und dem Nulleiter N teilt sich die Spannung zu einem Stoßstrom von 300 A dabei folgendermaßen auf: 600 V Spannungsabfall am Innenwiderstand Rᵢ der Stoßspannungsquelle, 1700 V Durchlaßspannung am Varistor 4 und etwa 1700 V am Begrenzungselement 9. Bei der gleichen Stoßspannungsbelastung von 4 kV beispielsweise zwischen einem Phasenleiter L1 und einem anderen Phasenleiter, beispielsweise L2, stellen sich an den Varistoren 4 und 5 zu einem Stoßstrom von 300 A die Durchlaßspannungen von je 1,7 kV ein. Die Varistoren 4, 5 und 6 werden daher bei Anschluß der Stoßspannung zwischen einem der Phasenleiter L1, L2, L3 und den Nulleiter N annähernd gleich belastet (Î = 300 A), wie bei Anschluß der Stoßspannung zwischen einem Phasenleiter und einem anderen Phasenleiter.

In der Ausführungsform einer Stromversorgung gemäß Figur 1 ist das Begrenzungselement 9 als Widerstand zwischen der Leitungsverbindung 8 und einem Anschlußpunkt 11 in der Anschlußleitung zum Nulleiter N angeordnet. Dieser Widerstand kann jedoch mit der gleichen spannungsbegrenzenden Wirkung auch im Anschlußleiter zwischen diesem Anschlußpunkt 11 und dem Nulleiter N angeordnet werden.

In der Ausführungsform einer Anordnung zur Stromversorgung gemäß Figur 2 ist die Kombination eines Fehlerstromschutzschalters 12, eines sogenannten FI-Schalters, mit einem Differenzstrom-Schutzschalter 22, einem sogenannten DI-Schalter, vorgesehen, die so ausgelegt sein können, daß sie sich gegenseitig ergänzen und im Falle eines Wechselfehlerstromes der FI-Schalter 12 und im Falle eines glatten oder langsam ansteigenden Gleichfehlerstromes sowie eines pulsierenden Fehlerstromes und gegebenenfalls bei größeren Wechselfehlerströmen der DI-Schalter 22 anspricht. Beide Fehlerstromschutzschalter sind in einer Drehstromzuleitung mit den Phasenleitern L1, L2 und L3 und dem Nulleiter N hintereinander angeordnet. Zum Fehlerstromschutzschalter 12 gehört ein Leistungsschalter 14 und ein Summenstromwandler 16 mit nicht näher bezeichneten Primärwicklungen, dessen Sekundärwicklung 17 im Auslösekreis des Leistungsschalters 14 liegt. Dieser Auslösekreis enthält einen Kondensator 18 und einen Auslöser 19. Der Auslöser 19, beispielsweise ein Haltemagnet oder auch ein Sperrmagnet, steht in Wirkverbindung mit dem Schaltschloß 20 des Leistungsschalters 14. Der Kondensator 18 im Auslösekreis ist so ausgelegt, daß er bei Wechselfehlerströmen und auch bei pulsierenden Fehlerströmen auslöst.

Der netzspannungsabhängige Differenzstromschalter 22 ist so ausgelegt, daß er auch bei langsam ansteigendem Gleichfehlerstrom auslöst. Er enthält zu diesem Zweck einen Summenstromwandler 24 mit nicht näher bezeichneten Primärwicklungen und einer Sekundärwicklung 25, die an eine Steuerelektronik 26 angeschlossen ist. Zur Stromversorgung dieser Steuerelektronik 26, deren Ausgang im Sekundärkeis des Summenstromwandlers 16 auf den Auslöser 19 des Leistungsschalters 14 einwirkt, ist ein dreiphasiger Brückengleichrichter 27 vorgesehen, der in der Einspeisungsrichtung hinter dem Leistungsschalter 14 an die Drehstromleiter L1, L2 und L3 und den Nulleiter N angeschlossen ist. Dem Brüickengleichrichter 27 ist der Überspannungsschutz 3 vorgeschaltet. In dieser Ausführungsform des Überspannungsschutzes 3 sind nicht nur die drei Phasenleiter L1, L2 und L3 jeweils über ihren Überspannungsableiter 4 bzw. 5 bzw. 6, sondern auch der Nulleiter N über einen Überspannungsableiter 7 an die gemeinsame Leitungsverbindung 8 angeschlossen. Die Einzelteile des Differenzstrom-Schutzschalters 22 sind in einem Gehäuse 28 angeordnet, das aus elektrisch isolierendem Material, vorzugsweise Kunststoff, besteht und ein Anschluß an einen Schutzleiter nicht erfolgt. Im Falle einer Überspannung am Eingang des Brückengleichrichters 27 liegt deshalb zwischen den Eingangsleitern im Falle einer Überspannung immer eine Reihenschaltung von jeweils zwei Überspannungsableitern. Als Überspannungsableiter 4 bis 7 können vorzugsweise Varistoren vorgesehen sein.

Bei Spannungsbegrenzung der Phasenleiter L1, L2, L3 und des Nulleiters N durch Anschluß der Varistoren 4, 5, 6 und 7 an den Leitern gegen die gemeinsame Verbindung 8 fließt der Stoßstrom von Î = 300 A bei einer Stoßspannung von 4 kV mit einem Innenwiderstand der Spannungsquelle Rᵢ = 2 Ohm immer über zwei in Reihe geschaltete Varistoren. Die Stoßspannung von 4 kV teilt sich daher folgenderweise auf: 600 V Spannungsabfall am Innenwiderstand Rᵢ der Stoßspannungsquelle und 1700 V Durchlaßspannung an jedem der beiden in Reihe geschalteten Varistoren.

Die Strombelastung der Varistoren wird daher für die Ausführung nach Figur 1 und nach Figur 2 bei einem beliebigen Anschluß der Stoßspannung (4 kV, Rᵢ = 2 Ohm) an zwei der vier Leiter L1, L2, L3 und N auf Î = 300 A begrenzt.

Zwischen dem Anschluß der Überspannungsableiter 4 bis 7 und dem Eingang des Brückengleichrichters 27 sind im allgemeinen noch in der Figur nicht dargestellte hochohmige Eingangswiderstände mit einem Widerstandswert von beispielsweise 30 kOhm angeordnet.

Durch den Überspannungsschutz 3 werden unkontrollierte Spannungsüberschläge, d.h. Kurzschlüsse innerhalb der Schutzschalterkombination, vermieden und die auftretende elektrische Störleistung begrenzt. Die Störströme werden über die Varistoren abgeleitet, wobei die elektrische Belastung für alle Störvariationen etwa gleich ist. Dadurch wird eine Überlastung des Überspannungsschutzes 3 vermieden und eine kostenoptimierte, normgerechte Geräteauslegung ermöglicht.

Im Ausführungsbeispiel gemäß den Figuren 1 und 2 ist die Anwendung der Gestaltungsmerkmale einer Stromversorgungseinrichtung gemäß der Erfindung zum Schutz einer Netzüberwachungseinrichtung und als Fehlerstrom- bzw. Differenzstromschutzgerät beschrieben. Die Erfindung ist jedoch allgemein anwendbar zum Geräteschutz gegen Uberspannungen, beispielsweise zum Schutz von Leistungsschaltern mit elektronischer Auslösung.

## Patentansprüche

1. Anordnung zur Stromversorgung einer Elektronik, die an ein Drehstromnetz mit einem Nulleiter (N) angeschlossen ist und mit einer Überspannungsschutzeinrichtung aus einzelnen zwischen die Phasenleiter (L1, L2, L3) und/oder den Nulleiter (N) geschalteten Überspannungsbegrenzungselementen (4 bis 6, 7, 9) versehen ist, **dadurch gekennzeichnet**, daß
- die drei Phasenleiter (L1, L2, L3) jeweils erdpotentialfrei über einen Überspannungsableiter (4 bis 6) an eine gemeinsame Verbindung (8) angeschlossen sind,
- die über ein Begrenzungselement (7, 9) mit dem Nulleiter (N) verbunden ist,
und daß
- die Überspannungsableiter (4 bis 6) und das Begrenzungselement (7, 9) so bemessen sind, daß jeweils in der Reihenschaltung eines dieser Überspannungsableiter (4 bis 6) mit einem der übrigen Überspannungsableiter oder dem Begrenzungselement (7, 9) bei einer vorbestimmten Stoßspannung (Û) und einem vorbestimmten Mindestwert des Innenwiderstandes (Rᵢ) der Spannungsquelle der Stoßstrom (Î) einen vorbestimmten Grenzwert nicht überschreitet.

2. Anordnung nach Anspruch 1, **dadurch gekennzeichnet**, daß als Begrenzungselement (9) ein Widerstand vorgesehen ist (Figur 1).

3. Anordnung nach Anspruch 1, insbesondere zur Stromversorgung der Elektronik eines Differenzstrom-Schutzschalters, die über einen Gleichrichter (27) in Dreiphasen-Brückenschaltung an das Drehstromnetz mit dem Nulleiter (N) angeschlossen ist , **dadurch gekennzeichnet**, daß als Begrenzungselement ein Uberspannungsableiter (7) vorgesehen ist.

4. Anordnung nach einem der Ansprüche 1 bis 3, **gekennzeichnet** durch Varistoren als Uberspannungsableiter (4 bis 7).

## Claims

1. Arrangement for supplying current to an electronics unit which is connected to a three-phase network having a neutral conductor (N) and is provided with an overvoltage-protector consisting of individual overvoltage-limiting elements (4 to 6, 7, 9) which are connected between the phase conductors (L1, L2, L3) and/or the neutral conductor (N), characterised in that
- the three phase conductors (L1, L2, L3) are each connected, in a manner free of earth potential by way of a surge arrester (4 to 6), to a common connection (8),
- which is connected to the neutral conductor (N) by way of a limiting element (7, 9),
and in that
- the surge arresters (4 to 6) and the limiting element (7, 9) are rated in such a way that in each case in the series connection of one of these surge arresters (4 to 6) with one of the other surge arresters or the limiting element (7, 9) in the case of a predetermined surge voltage (Û) and a predetermined minimum value of the internal resistance (Rᵢ) of the voltage source the surge current (Î) does not exceed a predetermined limiting value.

2. Arrangement according to claim 1,
characterised in that a resistor is provided as the limiting element (9) (Figure 1).

3. Arrangement, in particular for supplying current to the electronics unit of a differentialcurrent circuit-breaker, which is connected, by way of a rectifier (27) in a three-phase bridge circuit arrangement, to the three-phase network having the neutral conductor (N), characterised in that a surge arrester (7) is provided as the limiting element.

4. Arrangement according to one of the claims 1 to 3, characterised by varistors as surge arresters (4 to 7).

## Revendications

1. Dispositif d'alimentation en courant d'un dispositif électronique, qui est connecté à un réseau triphasé comportant un conducteur neutre (N) et qui est muni d'un dispositif de protection contre les surtensions constitué de divers éléments (4 à 6, 7, 9), de limitation des surtensions branchés entre les conducteurs (L1, L2, L3) de phase et/ou le conducteur neutre (N), caractérisé en ce que
- les trois conducteurs de phase (L1, L2, L3) sont connectés chacun, sans potentiel de terre, par l'intermédiaire d'un parasurtension (4 à 6) à une liaison commune (8),
- qui est relié par l'intermédiaire d'un élément (7, 9) de limitation au conducteur neutre (9),
et en ce que
- les parasurtensions (4 à 6) et l'élément (7, 9) de limitation sont dimensionnés de telle sorte que pour une tension (Û) de choc prédéterminée et une valeur minimum prédéterminée de la résistance interne (Rᵢ) de la source de tension, dans le circuit série de l'un de ces parasurtensions (4 à 6) avec l'un des parasurtensions restants ou avec l'élément (7, 9) de limitation, le courant de choc Î n'est pas supérieur à une valeur limite prédéterminée.

2. Dispositif suivant la revendication 1, caractérisé en ce qu'il est prévu comme élément (9) de limitation une résistance (Figure 1).

3. Dispositif suivant la revendication 1, notamment pour l'alimentation en courant du dispositif électronique d'un disjoncteur à courant de différence, qui est connecté par l'intermédiaire d'un redresseur (27) en circuit en pont triphasé au réseau triphasé comportant le conducteur neutre (N), caractérisé en ce qu'il est prévu comme élément de limitation un parasurtension (7).

4. Dispositif suivant l'une des revendications 1 à 3, caractérisé par des varistors en tant que parasurtension (4 à 7).
